Europäisches Patentamt

European Patent Office

Office européen des brevets

(19)

(11) **EP 1 302 034 B1**

(12) **EUROPÄISCHE PATENTSCHRIFT**

(45) Veröffentlichungstag und Bekanntmachung des Hinweises auf die Patenterteilung:
**05.10.2005 Patentblatt 2005/40**

(51) Int Cl.⁷: **H04L 12/56**, H04B 7/26

(21) Anmeldenummer: **01953882.6**

(86) Internationale Anmeldenummer:
**PCT/DE2001/002542**

(22) Anmeldetag: **05.07.2001**

(87) Internationale Veröffentlichungsnummer:
**WO 2002/007393 (24.01.2002 Gazette 2002/04)**

(54) **VERFAHREN ZUR ERHÖHUNG DES DATENDURCHSATZES IN EINEM KOMMUNIKATIONSSYSTEM**

METHOD FOR INCREASING THE DATA THROUGHPUT IN A COMMUNICATION SYSTEM

PROCEDE D'AUGMENTATION DU FLUX DE DONNEES DANS UN SYSTEME DE COMMUNICATION

(84) Benannte Vertragsstaaten:
**DE FI FR GB IT SE**

(30) Priorität: **19.07.2000 DE 10035132**

(43) Veröffentlichungstag der Anmeldung:
**16.04.2003 Patentblatt 2003/16**

(73) Patentinhaber: **Infineon Technologies AG**
**81669 München (DE)**

(72) Erfinder:
• **SCHMANDT, Bernd**
**40878 Ratingen (DE)**
• **WARMERS, Michael**
**41812 Erkelenz (DE)**

(74) Vertreter: **Lange, Thomas et al**
**Patentanwälte**
**Lambsdorff & Lange,**
**Dingolfinger Strasse 6**
**81673 München (DE)**

(56) Entgegenhaltungen:
WO-A-00/31932                US-A- 5 247 617

• **HAARTSEN J: "BLUETOOTH - THE UNIVERSAL RADIO INTERFACE FOR AD HOC, WIRELESS CONNECTIVITY" ON - ERICSSON REVIEW, ERICSSON. STOCKHOLM, SE, Nr. 3, 1998, Seiten 110-117, XP000783249 ISSN: 0014-0171**
• **KALIA M ET AL: "DATA SCHELDULING AND SAR BLUETOOTH MAC" VTC 2000-SPRING. 2000 IEEE 51ST. VEHICULAR TECHNOLOGY CONFERENCE PROCEEDINGS. TOKYO, JAPAN, MAY 15-18, 2000, IEEE VEHICULAR TECHNOLGY CONFERENCE, NEW YORK, NY: IEEE, US, Bd. 2 OF 3. CONF. 51, 15. Mai 2000 (2000-05-15), Seiten 716-720, XP000967963 ISBN: 0-7803-5719-1**

**Beschreibung**

Die Erfindung betrifft ein Verfahren zur Erhöhung des Datendurchsatzes in einem Kommunikationssystem nach dem Oberbegriff des Anspruchs 1.

Ein Kommunikationssystem dieser Art ist in der Datei "Specification of the Bluetooth System", 1.12.1999, Dokument Nr. 1.C.47./1.0 B, veröffentlicht im Internet unter der Adresse http://www.bluetooth.com, beschrieben. Diesem System liegt ein kürzlich entwickelter Kommunikationsstandard zugrunde, der eine TDD-(Time-Division Duplex-)basierte Datenübertragung zwischen elektronischen Endeinrichtungen (z.B. Computern, Computer-Peripheriegeräten, Telefonen, Nebenstellen) ermöglicht. Die Datenübertragung erfolgt im Bluetooth-System über eine Funkstrecke.

Eine Besonderheit des Bluetooth-Systems besteht darin, daß nicht alle miteinander kommunizierenden Endgeräte gleichberechtigt sind. Das Bluetooth-System umfaßt genau eine Haupt-Endeinrichtung (Master) und eine oder mehrere Neben-Endeinrichtungen (Slaves). Die Rolle (Slave oder Master), die eine Endeinrichtung im Kommunikationssystem einnimmt, ist keine Eigenschaft der entsprechenden Endeinrichtung, sondern auf Protokollebene des Systems frei zuweisbar. Die Haupt-Endeinrichtung agiert als Kontrollinstanz für die Neben-Endeinrichtungen.

Der Bluetooth-Kommunikationskanal ist in Zeitschlitze der Länge 625 µs unterteilt. In jedem Zeitschlitz können nur Daten eines Senders (entweder Haupt-Endeinrichtung oder eine der Neben-Endeinrichtungen) übertragen werden. Dabei ist zu beachten, daß eine Neben-Endeinrichtung im aktiven Zustand (d.h. wenn der Verbindungsaufbau mit der Haupt-Endeinrichtung bereits abgeschlossen ist) nur dann Nutzdaten in Form von Datenpaketen an die Haupt-Endeinrichtung senden kann, wenn sie zuvor ein Datenpaket (entweder ein Nutzdaten tragendes Datenpaket oder ein speziell für den Datenabruf vorgesehenes Datenpaket) erhalten hat.

Eine weitere Besonderheit des Bluetooth-Kommunikationssystems besteht darin, daß zwei Verbindungsarten, nämlich eine synchrone Datenverbindung (für Sprache) und eine asynchrone Datenverbindung (für reine Datenapplikationen) unterstützt werden. Eine synchrone Datenverbindung wird als SCO-(Synchronous Connection-Oriented) Verbindung und eine asynchrone Datenverbindung wird als ACL-(Asynchronous Connection-Less)Verbindung bezeichnet. Bei einer ACL-Verbindung ist die Datenmenge, die eine Neben-Endeinrichtung in Antwort auf ein von der Haupt-Endeinrichtung erhaltenes Datenpaket zurückschicken kann, begrenzt (genauer gesagt kann eine Neben-Endeinrichtung auf jedes erhaltene Datenpaket bei einer ACL-Verbindung lediglich ein einziges Datenpaket aussenden). Diese Beschränkung macht es erforderlich, daß die Haupt-Endeinrichtung sämtliche Neben-Endeinrichtungen regelmäßig durch Zusendung eines Datenpakets ansprechen muß, um eine Mindestdaten-Transferrate in Aufwärtsrichtung (d.h. von den Neben-Endeinrichtungen zu der Haupt-Endeinrichtung) sicher zu gewährleisten. Reicht der Nutzdatenverkehr in Abwärtsrichtung (von der Haupt-Endeinrichtung zu einer betrachteten Neben-Endeinrichtung) hierfür nicht aus, werden, wie bereits erwähnt, spezielle Abruf-Datenpakete (sogenannte POLL-Datenpakete) eingesetzt.

Der Datenpaketverkehr in Abwärtsrichtung erfolgt daher nach einem Ansprech-Zeitschema, welches einerseits dafür sorgt, daß das Datenaufkommen an der Haupt-Endeinrichtung auf die aktiven und als Adressaten vorgesehenen Neben-Endeinrichtungen verteilt wird, und das andererseits gewährleistet, daß aktive Neben-Endeinrichtungen, für die gegenwärtig keine Nutzdaten in der Haupt-Endeinrichtung bereitstehen, dennoch mit einer minimalen Ansprechrate angesprochen bzw. "gepollt" werden. Eine bekannte Möglichkeit, die die vorstehend genannten Forderungen erfüllt, besteht darin, die Neben-Endeinrichtungen periodisch unter Verwendung jeweils konstanter Wiederholungszeitintervalle zeitversetzt anzusprechen. Das Wiederholungszeitintervall muß ausreichend kurz sein, um die geforderte Mindestdaten-Transferrate zu gewährleisten.

Dieses starre Ansprech-Zeitschema hat den Vorteil einer festen Zuordnung zwischen Zeitschlitzen und Neben-Endgeräten und erfordert daher einen geringen Kontrollaufwand. Es ermöglicht jedoch keinen optimalen Datendurchsatz in dem System. Ursache hierfür ist, daß neben der Kapazität, die für die Kommunikation unter aktiven Endeinrichtungen benötigt wird, eine verbleibende Kapazität für weitere Aufgaben wie Verbindungsaufbau, Verbindungsabbau, Signalisierung von Nebenstellen, die sich in einem Niederenergie-Modus (Hold-Mode, Park-Mode oder Sniff-Mode) befinden, bei Bedarf verfügbar sein muß. Bei dem starren Ansprech-Zeitschema muß hierfür ein festes Kapazitätskontingent (d.h. eine feste Anzahl von Zeitschlitzen pro Wiederholungsintervall) vorgehalten werden, das, wie leicht vorstellbar, in vielen Situationen gar nicht genutzt wird. Beispielsweise kann das Bluetooth-System so konfiguriert werden, daß der Aufbau weiterer Verbindungen oder bestimmte Betriebsmodi nicht gewünscht sind. Folglich bestehen in der Praxis vielfach freie Kapazitäten, die weder für eine Übertragung von Nutzdaten noch für Kontroll- oder Signalisierungsaufgaben genutzt werden.

Aus Kalia, M. et al.:"Data Scheduling and SAR for Bluetooth MAC", VTC 2000 Spring, 2000 IEEE 51ST Vehicular Technology Conference Proceedings, Tokyo, Japan, May 15 - 18, 2000, IEEE, US, Bd. 2 of 3, Conf. 51, 15. Mai 2000, S. 716 - 720 ist ein Verfahren zur Erhöhung des Datendurchsatzes in einem Bluetooth-System beschrieben. Von dem zyklischen Round-Robin-Polling-Schema wird dann abgewichen, wenn sich beispielsweise sowohl die Haupt-Endeinrichtung als auch die Neben-Endeinrichtung Datenpakete in entsprechenden Zeitschlitzen zusenden möchten. In diesem Fall werden z. B. für die Haupt-Endeinrichtung mehr Slots zum Senden zur Verfügung gestellt. Die Neben-Endeinrichtung teilt der Haupt-Endeinrichtung durch ein zusätzliches, in dem an die Haupt-Endeinrichtung gesendeten Datenpaket enthaltenen Informationsbit mit, ob noch Daten zum Senden an die Haupt-Endeinrichtung in der Neben-Endeinrichtung vorhanden sind, worauf hin das Ansprech-Zeitschema geändert wird. Bei dem bekannten Verfahren wird daher eine zusätzliche Information, die die Neben-Endeinrichtung an die Haupt-Endeinrichtung übersendet, benötigt, um die in der Neben-Endeinrichtung vorhandene und an die Haupt-Endeinrichtung zu sendende Datenmenge und damit eine Betriebsbedingung der Neben-Endeinrichtung zu kennen und folglich die Zahl der zur Verfügung gestellten Slots bzw. das Polling-Schema zu verändern.

In WO 00/31932 ist ein auf einem Zeitschlitzverfahren basierendes Kommunikationssystem offenbart. Das Pollen zwischen einer Haupt-Endeinrichtung und einer Neben-Endeinrichtung des Kommunikationssystems wird mittels eines flexiblen Polling-Schemas zwischen bestehenden asynchronen Verbindungen durchgeführt, wobei keine Bedingungen angegeben werden, wann ein Ändern des Polling-Schemas erfolgt.

Der Erfindung liegt die Aufgabe zugrunde, ein Verfahren anzugeben; welches es ermöglicht, in einem Kommunikationssystem der eingangs genannten Art einen hohen Datendurchsatz zu erreichen.

Diese Aufgabe wird durch die Merkmale der unabhängigen Ansprüche 1 und 2 gelöst.

Nach einem ersten Aspekt der Erfindung werden diejenigen Neben-Endeinrichtungen durch Einfügen von zusätzlichen Ansprech-Zeitpunkten in das Ansprech-Zeitschema häufiger (durch Zusendung eines Datenpakets) angesprochen, die in Antwort auf das letzte Ansprechen mit einem Nutzinformation tragenden Datenpaket geantwortet haben. Bei diesen Neben-Endeinrichtungen ist zu vermuten, daß noch weitere Nutzdaten zur Übertragung in Aufwärtsrichtung bereitstehen. Diese werden dann durch das zusätzliche Ansprechen der fraglichen Neben-Endeinrichtung rascher als bei Verwendung eines starren Ansprech-Zeitschemas übertragen.

Ist nach einem zweiten Aspekt der Erfindung in dem Kommunikationssystem vereinbart, daß eine Neben-Endeinrichtung auf den fehlerfreien Erhalt eines Nutzdaten tragenden Datenpakets von der Haupt-Endeinrichtung durch Rücksenden eines den fehlerfreien Empfang des erhaltenen Datenpaketes bestätigenden Datenpakets, an die Haupt-Endeinrichtung antwortet, kennzeichnet sich eine Verfahrensmaßnahme dadurch, daß die vorgegebene Betriebsbedingung bezüglich einer Neben-Endeinrichtung dann eintritt, wenn in Antwort auf ein an die betrachtete Neben-Endeinrichtung adressiertes und ausgesendetes Datenpaket keine Bestätigung des fehlerfreien Empfanges der Nutzdaten in einem von dieser Neben-Endeinrichtung rückgesendeten Datenpaketen an der Haupt-Endeinrichtung erhalten wird. In diesem Fall kann die Haupt-Endeinrichtung zwar nicht unbedingt davon ausgehen, daß die betreffende Neben-Endeinrichtung eine auszusendende Datenlast bereithält, jedoch erscheint ein neuerliches "vorzeitiges" Ansprechen dieser Neben-Endeinrichtung deshalb sinnvoll, weil letztere das vorhergehende Ansprechen nicht ordnungsgemäß bestätigt hat.

Mit anderen Worten liegt der Erfindung das Prinzip zugrunde, im System vorhandene aber ungenutzte Kapazität dann zum Zwecke einer Übertragung von Nutzdaten zu nutzen, wenn eine Situation (in Form des Eintritts einer Betriebsbedingung) vorliegt, in der das System davon ausgehen kann, daß an der Haupt-Endeinrichtung und/oder an einer oder mehreren der Neben-Endeinrichtungen noch Nutzdaten bereitstehen, die schnellstmöglich übertragen werden sollen. Eine weitere vorteilhafte Verfahrensmaßnahme kennzeichnet sich dadurch, daß das aktualisierte Ansprech-Zeitschema auf das vor dem Eintritt der Betriebsbedingung verwendete Ansprech-Zeitschema zurückgesetzt wird, sofern keine der vorstehend genannten Betriebsbedingungen mehr vorliegen bzw. noch erfüllt sind. Dies vermeidet ein aus Sicht der Ressourcenaufteilung unnötig häufiges Ansprechen einer Neben-Endeinrichtung, bei der nicht mehr davon ausgegangen werden muß, daß eine Datenlast für die Übertragung in Aufwärts- oder Abwärtsrichtung in der betreffenden Neben-Endeinrichtung bzw. der Haupt-Endeinrichtung bereitgehalten wird.

Es wird darauf hingewiesen, daß das erfindungsgemäße Einfügen von Ansprech-Zeitpunkten in ein bestehendes Ansprech-Zeitschema nicht voraussetzt, daß dieses bestehende Ansprech-Zeitschema notwendigerweise eine konstante, identische Wiederholungsperiode für das Ansprechen jeder Neben-Endeinrichtung verwendet. Mittels der Erfindung kann der Datendurchsatz auch in einem Kommunikationssystem mit einem in gewissem Maße bereits flexibel ausgelegten Ansprech-Zeitschema verbessert werden. Ein besonders großer Effekt wird durch die Erfindung jedoch bei Einfügen von zusätzlichen Ansprech-Zeitpunkten in ein starres (d.h. mit einer konstanten und für alle Neben-Endeinrichtungen identischen Wiederholungsperiode ausgelegten) Ansprech-Zeitschema erreicht.

Wie bereits erwähnt, geht die Erfindung von einer ersten Verbindungsart aus, in welcher eine Neben-Endeinrichtung auf ein Ansprechen seitens der Haupt-Endeinrichtung durch Rücksendung nur einer begrenzten Datenmenge antworten kann. Diese Voraussetzung ist bei einer ACL-Verbindung im Bluetooth-Kommunikationssystem erfüllt. Bei einer SCO-Verbindung, die in Konkurrenz zu einer ACL-Verbindung in einem derartigen System bestehen kann, können im Gegensatz dazu in reservierten Zeitschlitzen auch ohne Aufruf durch die Haupt-Endeinrichtung Datenpakete von der Neben-Endeinrichtung zu der Haupt-Endeinrichtung übertragen werden. Da die synchronen, verbindungsorientierten SCO-Verbindungen Vorrang vor den ACL-Verbindungen genießen, dürfen SCO-Verbindungen, für die wie bereits erwähnt vorab feste Zeitschlitze reserviert werden, nicht durch das erfindungsgemäße Verfahren gestört bzw. unterbrochen werden. In diesem Fall kennzeichnet sich eine vorteilhafte Verfahrensmaßnahme dadurch, daß zusätzliche Ansprech-Zeitpunkte ausschließlich in nicht für eine SCO-Verbindung reservierte Zeitschlitze eingefügt werden. Eine andere Möglichkeit besteht darin, zusätzliche Ansprech-Zeitpunkte erst dann wieder einzufügen, wenn eine Übertragung von Datenpaketen von einer Neben-Endeinrichtung zur Haupt-Endeinrichtung in der zweiten Verbindungsart (SCO-Verbindung) beendet ist.

Die Erfindung wird nachfolgend anhand eines Ausführungsbeispiels unter Bezugnahme auf die Zeichnung näher erläutert; in dieser zeigt:

Fig. 1 eine schematische Darstellung von Funktionsblöcken einer Endeinrichtung eines Kommunikationssystems;

Fig. 2 eine schematische Darstellung möglicher System- bzw. Netzkonfigurationen;

Fig. 3 ein Diagramm zur Veranschaulichung der Zeitschlitz-Struktur im Zusammenhang mit der Übertragung von Datenpaketen über den Kommunikationskanal;

Fig. 4 eine schematische Darstellung des Aufbaus eines Datenpakets;

Fig. 5 eine schematische Darstellung eines Datenpaketkopfes;

Fig. 6 ein Zeitdiagramm zur Erläuterung der Steuerung des Kommunikationskanals bei einem Datenaustausch zwischen einer Haupt-Endeinrichtung und zwei Neben-Endeinrichtungen;

Fig. 7 ein Ansprech-Zeitschema nach dem Stand der Technik; und

Fig. 8 ein erfindungsgemäßes Ansprech-Zeitschema.

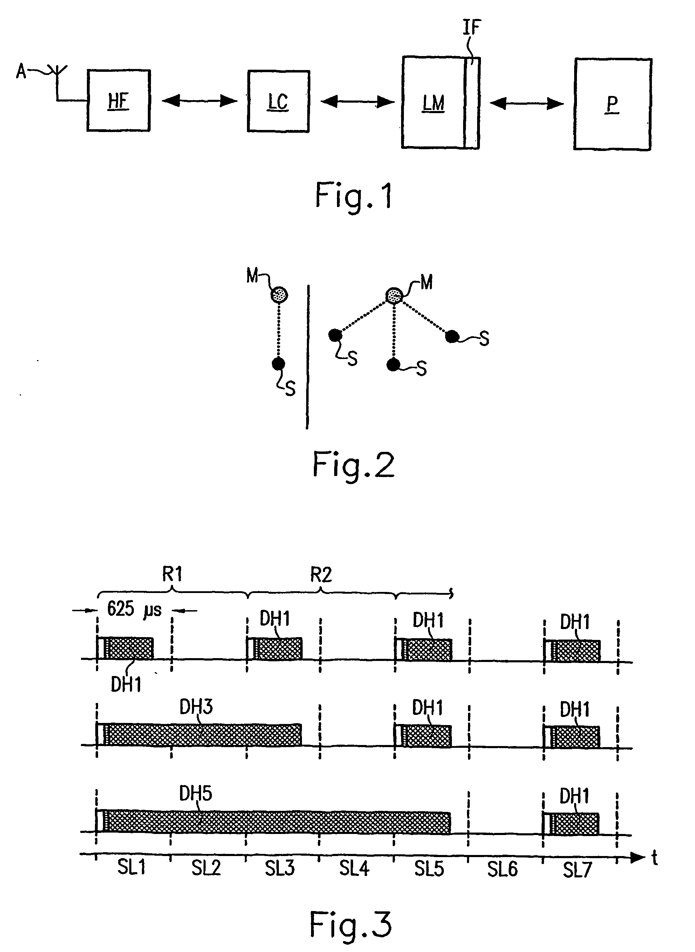

Fig. 1 zeigt die Grundstruktur einer Haupt- bzw. Neben-Endeinrichtung eines erfindungsgemäßen Kommunikationssystems. Die nachfolgende Beschreibung des Kommunikationssystems orientiert sich an dem Bluetooth-Standard, der zur drahtlosen Datenübertragung über kurze Entfernungen vorgesehen ist. Die Erfindung ist jedoch nicht auf ein Kommunikationssystem basierend auf dem Bluetooth-Standard beschränkt, sondern ermöglicht in vergleichbaren TDD-Systemen generell eine Verbesserung des Datendurchsatzes.

Eine Haupt- bzw. Neben-Endeinrichtung umfaßt einen Rechner bzw. Prozessor P, einen Verbindungs-Manager LM mit Rechner-Steuerungsschnittstelle IF, einen Verbindungs-Controller LC und eine Hochfrequenzstufe HF mit Antenne A. Daten, die von dem Rechner bzw. Prozessor P ausgegeben und versendet werden sollen, müssen von dem Verbindungs-Manager LM zu geeigneten Datenpaketen zusammengestellt werden. Ferner übernimmt der Verbindungs-Manager LM die Aufgaben der Netzkonfiguration und des Aufbaus von Verbindungen.

Der Verbindungs-Controller LC entscheidet darüber, wann die Aussendung eines Datenpakets erfolgt. Das Datenpaket wird geeignet ergänzt (es werden den Nutzdaten ein geeigneter Zugriff-Code und ein Paketkopf vorangestellt) und das fertiggestellte Datenpaket wird der Hochfrequenzstufe HF zur Modulation eines Trägers übergeben. Der Verbindungs-Manager LM und der Verbindungs-Controller LC bilden somit die Protokollschichten des betrachteten Kommunikationsstandards (z.B. Bluetooth-Standard).

Fig. 2 veranschaulicht die Konfiguration eines Bluetooth-Netzes (Piconet). Das Piconet kann zwei bis acht aktive Endeinrichtungen umfassen. Jedes Netz umfaßt genau eine Haupt-Endeinrichtung; die restlichen Endeinrichtungen werden durch Neben-Endeinrichtungen realisiert. Die Neben-Endeinrichtungen können nur mit der Haupt-Endeinrichtung, jedoch nicht untereinander, in Kommunikationskontakt treten. Das minimale Piconet wird von einer Haupt-Endeinrichtung (Master) M und einer Neben-Endeinrichtung (Slave) S gebildet, siehe den linken Teil der Fig. 2. Im rechten Teil der Fig. 2 ist ein Piconet bestehend aus drei Neben-Endeinrichtungen S und einer Haupt-Endeinrichtung M dargestellt. Die Entscheidung, ob eine Endeinrichtung im Netz als Haupt- oder Neben-Endeinrichtung fungiert, wird auf Protokollebene vom Verbindungs-Manager LM getroffen, d.h. ist keine Hardware-Eigenschaft der betrachteten Endeinrichtungen.

Der Kommunikationskanal des Bluetooth-Systems gliedert sich in Zeitschlitze der Länge 625 μs. In Fig. 3 sind sieben Zeitschlitze SL1, SL2, ..., SL7 auf der Zeitachse t aufgetragen. Zwei aufeinanderfolgende Zeitschlitze SL1, SL2 bzw. SL3, SL4, usw. werden zu einem Rahmen R1, R2, ... der Länge 1250 μs zusammengefaßt. Folglich entsprechen 800 Rahmen der Zeitdauer von einer Sekunde.

Wie bereits erwähnt, können gemäß dem Bluetooth-Standard zwei unterschiedliche Datenverbindungsarten, nämlich ACL-Verbindungen und SCO-Verbindungen, realisiert werden.

Bei der asynchronen ACL-Datenverbindung existieren sechs verschiedene Bluetooth-Datenpakete. Unterschieden werden DM-Pakete (Data Medium Rate) und DH-Pakete (Data High Rate). DM-Pakete sind durch eine Kanalkodierung geschützt, während DH-Pakete ohne Kanalkodierung übertragen werden. Die Entscheidung, ob eine Kanalkodierung vorzunehmen ist oder nicht (d.h. die Entscheidung welcher Pakettyp eingesetzt werden soll), wird auf der Protokollebene getroffen und ist abhängig von den aktuellen Kanalbedingungen. Sowohl die DM- als auch die DH-Datenpakete können in drei unterschiedlichen Längen vorliegen. DM1- und DH1-Datenpakete belegen jeweils einen Zeitschlitz, DM3- und DH3-Datenpakete belegen drei Zeitschlitze und DM5- und DH5-Datenpakete belegen jeweils fünf Zeitschlitze. In Fig. 3 sind in beispielhafter Weise DH1-, DH3- und DH5-Datenpakete über der Zeitschlitzstruktur des Übertragungskanals dargestellt.

Bei den synchronen SCO-Datenverbindungen, mit denen Sprachdaten übertragen werden, sind drei verschiedene Datenpakete, bezeichnet als HV1, HV2 und HV3, definiert. Jedes dieser Datenpakete wird innerhalb eines Zeitschlitzes SL1, SL2, ... übertragen. Die Datenpakete HV1, HV2, HV3 unterscheiden sich in der enthaltenen Information. Die Brutto-Nutzdatenmenge ist bei allen Paketen identisch und beträgt 240 Bit. Aufgrund unterschiedlicher Kanalkodierungen unterscheiden sich die Datenpakete jedoch in ihrer Netto-Datenmenge. Die Netto-Datenmenge beträgt beim HV1-Paket 80 Bit, beim HV2-Paket 160 Bit und beim HV3-Paket 240 Bit. Um die geforderte Datenrate von 64 kbit/s bidirektional übertragen zu können, muß bei Verwendung von HV1-Paketen jeder Rahmen, bei Verwendung von HV2-Paketen jeder zweite Rahmen und bei Verwendung von HV3-Paketen jeder dritte Rahmen der SCO-Verbindung zugewiesen werden.

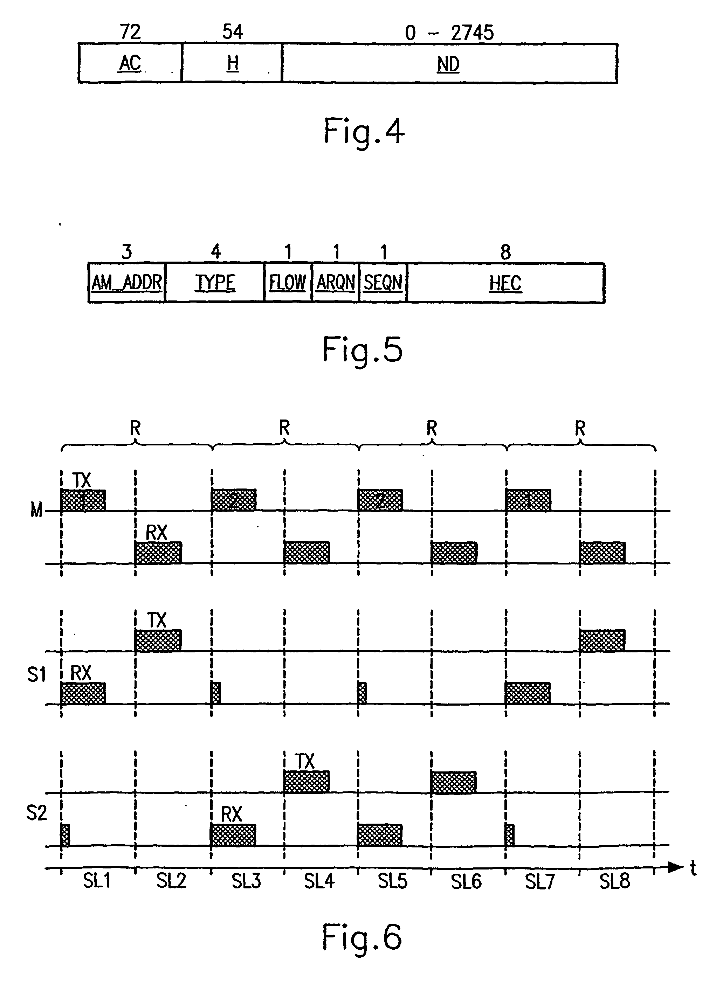

Fig. 4 zeigt das allgemeine Format sämtlicher Datenpakete. Die ersten 72 Bits des Datenpakets werden von einem Zugriffscode AC beansprucht. An den Zugriffscode AC schließt sich ein Paketkopf H der Länge von 54 Bit an. Der restliche Teil des Datenpakets wird durch die (gegebenenfalls kanalkodierten) Nutzdaten ND realisiert. Die Länge der Nutzdaten beträgt 0 bis 2745 Bit.

Der Zugriffscode AC wird unter anderem für Synchronisationszwecke eingesetzt. Die Struktur des Paketkopfes H ist in Fig. 5 in größerem Detail dargestellt. Für die Erfindung sind nur die Datenfelder AM_ADDR, TYPE und ARQN von Bedeutung. AM_ADDR repräsentiert die Adresse einer in dem Piconet aktiven Neben-Endeinrichtung S. Um jede Neben-Endeinrichtung separat identifizieren zu können, ist jeder Neben-Endeinrichtung eine temporäre 3-Bitadresse zugeordnet, die gültig ist, solange diese Endeinrichtung aktiv ist, d.h. eine feste (ACL- oder SCO-) Verbindung zu der Haupt-Endeinrichtung M existiert. Datenpakete, die zwischen der Haupt-Endeinrichtung M und der Neben-Endeinrichtung S ausgetauscht werden, tragen alle diese Adresse AM_ADDR der Neben-Endeinrichtung, d.h. die Adresse AM_ADDR der Neben-Endeinrichtung wird in beiden Daten-Transferrichtungen verwendet.

Das 4-Bitdatenwort TYPE gibt den Pakettyp an. Insbesondere kann TYPE entnommen werden, ob es sich um ein Datenpaket für eine ACL-Verbindung oder ein Datenpaket für eine SCO-Verbindung handelt. Die zugehörigen, Nutzdaten tragenden Datenpakete wurden bereits erwähnt. Es existieren ferner aber auch Datenpakete, die bei beiden Verbindungarten Verwendung finden. In diesem Zusammenhang von besonderer Bedeutung ist das Datenpaket POLL. Das Datenpaket POLL trägt keine Nutzdaten. Es wird bei beiden Verbindungsarten von der Haupt-Endeinrichtung M dazu verwendet, selektiv Neben-Endeinrichtungen anzusprechen und diesen damit zu ermöglichen, Daten an die Haupt-Endeinrichtung M zurückzusenden.

ARQN ist eine 1-Bit-Bestätigungsinformation, mit welcher eine Neben-Endeinrichtung S der Haupt-Endeinrichtung M mitteilt, ob Nutzdaten eines zuvor erhaltenen Datenpakets korrekt empfangen wurden.

Die weiteren Datenfelder FLOW, SEQN (jeweils ein Bit) sowie HEC (acht Bit) dienen Steuerungs- und Fehlerprüfzwecken; sie brauchen für die Erfindung nicht näher erläutert zu werden.

Eine Endeinrichtung kann sich entweder im TX-(Endeinrichtung sendet) oder im RX- (Endeinrichtung empfängt) Zustand befinden. Bei SCO-Verbindungen (deren Datenpakete stets lediglich einen Zeitschlitz belegen) werden Rahmen durch ein TX/RX-Pärchen belegt. D.h., daß die Haupt-Endeinrichtung M in der ersten Hälfte des Rahmens R für die Zeitdauer eines Zeitschlitzes in Senderichtung (TX) geschaltet ist und in der zweiten Hälfte des Rahmens in Empfangsrichtung (RX) vorliegt. Eine Neben-Endeinrichtung S ist demgegenüber immer zunächst in RX-Richtung und anschließend in TX-Richtung geschaltet. Die Neben-Endeinrichtung S antwortet sozusagen, nachdem sie ein Datenpaket erhalten hat.

Für ACL-Verbindungen gilt grundsätzlich, daß eine Neben-Endeinrichtung S nur dann auf Sendebetrieb (TX) umschalten darf, wenn sie im unmittelbar vorhergehenden Zeitschlitz ein Datenpaket empfangen hat. Zusätzlich ist jedoch zu berücksichtigen, daß Datenpakete existieren, die mehrere Zeitschlitze belegen. Wenn beispielsweise die Haupt-Endeinrichtung M ein DM5-Datenpaket sendet, das sich über fünf Zeitschlitze erstreckt, dann ist die Haupt-Endeinrichtung M für fünf Zeitschlitze in TX-Richtung geschaltet und die Neben-Endeinrichtung S ist für fünf Zeitschlitze in RX-Richtung geschaltet. In dem darauffolgenden Zeitschlitz wird die Neben-Endeinrichtung S der Haupt-Endeinrichtung M antworten. Das dabei ausgesendete Antwort-Datenpaket kann sich wiederum über ein, drei oder fünf Zeitschlitze erstrecken. In diesem Zeitraum ist die Haupt-Endeinrichtung M in RX-Richtung und die Neben-Endeinrichtung S in TX-Richtung geschaltet.

Fig. 6 verdeutlicht die zeitliche Abfolge von Sende- bzw. Empfangsvorgängen im Kommunikationskanal für das Beispiel eines eine Haupt-Endeinrichtung M und zwei Neben-Endeinrichtungen S1 und S2 umfassenden Piconets. Es werden ausschließlich Datenpakete betrachtet, die nur einen Zeitschlitz belegen. Im ersten Zeitschlitz SL1 sendet die Haupt-Endeinrichtung an die erste Neben-Endeinrichtung S1. Die erste Neben-Endeinrichtung S1 erwidert im zweiten Zeitschlitz SL2. Im dritten Zeitschlitz SL3 sendet die Haupt-Endeinrichtung M ein Datenpaket an die zweite Neben-Endeinrichtung S2. Letztere sendet im Zeitschlitz SL4 ein Antwort-Datenpaket an die Haupt-Endeinrichtung M zurück. Der in den Zeitschlitzen SL3 und SL4 dargestellte Ablauf wiederholt sich in den Zeitschlitzen SL5 und SL6. Der Sende-Empfangsablauf in den Zeitschlitzen SL7 und SL8 entspricht dem bereits erläuterten Ablauf in den ersten beiden Zeitschlitzen SL1 und SL2.

Im folgenden wird der Fall betrachtet, daß in dem Kommunikationssystem ausschließlich asynchrone ACL-Kommunikationsverbindungen bestehen. Da eine Neben-Endeinrichtung S aus eigenem Antrieb keine Datenpakete senden darf und auch bei Erhalt eines Datenpakets nur eine begrenzte Menge an Nutzdaten (nämlich ein Antwort-Datenpaket) zurücksenden kann, ist es für die Gewährleistung einer Mindest-Datentransferrate erforderlich, daß die Haupt-Endeinrichtung M jede Neben-Endeinrichtung S regelmäßig anspricht. Zu diesem Zweck wird von höheren Bluetooth-Protokollschichten für jede aktive ACL-Verbindung ein maximales Ansprech-Intervall (sogenanntes Poll-Interval) vorgegeben. Das maximale Poll-Intervall beschreibt die Zeit, die zwischen einem aufeinanderfolgenden Ansprechen ("Pollen") einer Neben-Endeinrichtung S, S1, S2 maximal vergehen darf. Typischerweise wird im Stand der Technik ein zyklisches Pollen sämtlicher aktiver Neben-Endeinrichtungen S unter Verwendung des maximalen Poll-Intervalls als Wiederholungszeitdauer realisiert. Das Pollen (Ansprechen) erfolgt entweder durch ein gerade bereitstehendes Nutzdaten tragendes Datenpaket oder - sofern ein solches fehlt - durch ein POLL-Datenpaket.

Der Bluetooth-Standard sieht vor, daß die Haupt-Endeinrichtung M dann noch verbleibende Übertragungskapazität dazu nutzt, weitere Verbindungen zu anderen Neben-Endeinrichtungen S, S1, S2 aufzubauen oder (nicht aktive) Neben-Endeinrichtungen, die sich in einem Energiesparmodus (Hold-Mode, Park-Mode oder Sniff-Mode) befinden, zu bedienen. Das Piconet kann jedoch auch so konfiguriert sein, daß kein Verbindungsaufbau gewünscht und/oder die Bedienung von nichtaktiven Neben-Endeinrichtungen wenig Kapazitäten bindet. In diesem Fall sieht die Erfindung vor, freie Kapazitäten durch gezieltes zusätzliches Ansprechen von aktiven Neben-Endeinrichtungen S zu nutzen und dadurch den Datendurchsatz zu erhöhen bzw. die zeitliche Auslastung des Kommunikationskanals zu verbessern.

Folglich kann vorgesehen sein, diejenigen Neben-Endeinrichtungen häufiger zu pollen, die nach dem letzten Pollen tatsächlich ein Datenpaket geschickt haben. Eine andere Möglichkeit "außerplanmäßigen" Pollens besteht darin, bei anliegender Datenlast an der Haupt-Endeinrichtung so schnell wie möglich ein Datenpaket an die entsprechende Neben-Endeinrichtung S, S1, S2 zu senden, anstatt abzuwarten, bis die Neben-Endeinrichtung gemäß eingestelltem Poll-Intervall zu bedienen ist. Ferner erscheint es sinnvoll, ein vorzeitiges Pollen einer Neben-Endeinrichtung S, S1, S2 in Betracht zu ziehen, sofern davon ausgegangen werden muß, daß das zuletzt von der Haupt-Endeinrichtung M gesendete Datenpaket aufgrund fehlender Bestätigung (erkennbar am Zustand des ARQN-Bits) nicht erhalten wurde.

Eine einfache Möglichkeit zur Ergänzung des Ansprech-Zeitschemas in diesen Fällen besteht darin, auf der Ebene des Verbindungs-Controllers LC eine zusätzliche Datenstruktur oder Tabelle bereitzustellen, in welcher jede Neben-Endeinrichtung S, S1, S2 gekennzeichnet wird, wenn wenigstens eine der folgenden Bedingungen zutrifft:

- Der Erhalt eines zuletzt von der Haupt-Endeinrichtung M gesendeten Nutzdaten tragenden Datenpakets ist von der angesprochenen Neben-Endeinrichtung noch nicht bestätigt worden;

- der Erhalt des zuletzt von der Haupt-Endeinrichtung M gesendeten, Nutzdaten tragenden Datenpakets ist von der Neben-Endeinrichtung bestätigt worden, es liegen jedoch bereits neue Daten vor, die an diese Neben-Endeinrichtung S zu übermitteln sind;

- von der Neben-Endeinrichtung S wurde ein Nutzdaten tragendes Datenpaket an der Haupt-Endeinrichtung M empfangen.

Sollte keine dieser Bedingungen (mehr) erfüllt sein, dann wird eine eventuell vorhandene Kennzeichnung der Neben-Endeinrichtung zurückgenommen.

Die auf diese Weise gewonnene Neben-Endeinrichtungs-charakteristische Information wird in der folgenden Weise bei der Sendetätigkeit der Haupt-Endeinrichtung M berücksichtigt. Wie bereits erwähnt, werden von dem Verbindungs-Manager LM bereitgestellte Daten von dem Verbindungs-Controller LC erst dann gesendet, wenn die jeweilige Neben-Endeinrichtung nach dem Ansprech-Zeitschema an der Reihe ist. Bei Vorhandensein einer gekennzeichneten Neben-Endeinrichtung S stellt der Verbindungs-Manager LM ein entsprechendes Datenpaket (POLL-Datenpaket oder ggf. Nutzinformation tragendes Datenpaket) zusammen und teilt dem Verbindungs-Controller LC die Kennzeichnung dieser Neben-Endeinrichtung S mit. Daraufhin trägt der Verbindungs-Controller LC bezüglich dieser Neben-Endeinrichtung S einen zusätzlichen Ansprech-Zeitpunkt in sein Ansprech-Zeitschema ein und sendet das Datenpaket zu diesem Zeitpunkt in den Übertragungskanal. Dieser Vorgang wird solange wiederholt, bis die Kennzeichnung der betrachteten Neben-Endeinrichtung S zurückgenommen ist.

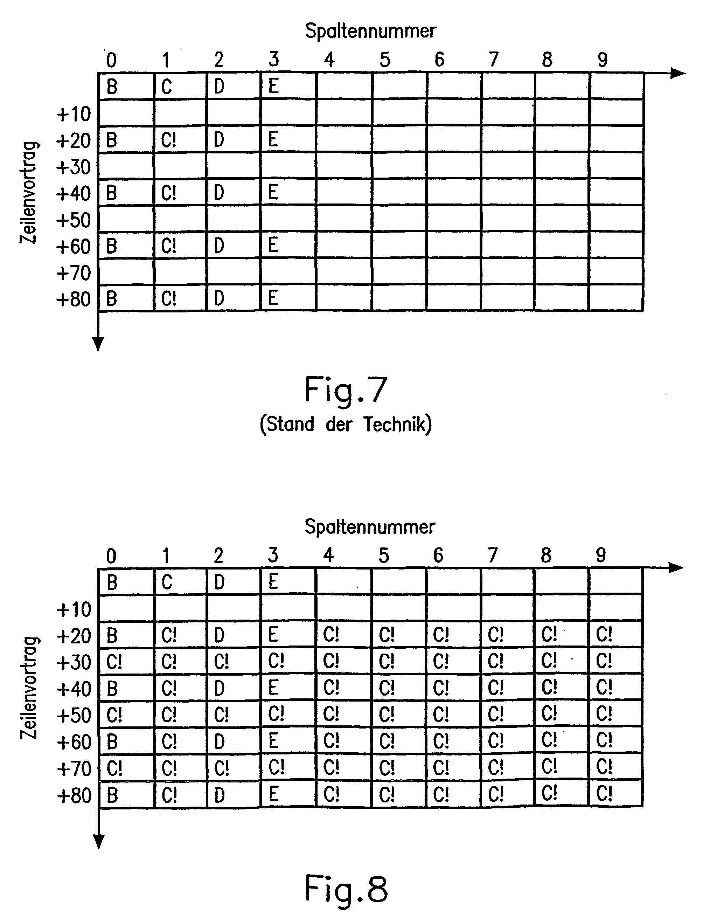

Fig. 7 zeigt ein Beispiel für ein Ansprech-Zeitschema nach dem Stand der Technik. Dem Beispiel liegt ein Piconet bestehend aus einer Haupt-Endeinrichtung A (z.B. ein Drucker) und vier Neben-Endeinrichtungen B, C, D und E (z.B. PCs) zugrunde. Die Haupt-Endeinrichtung A sei so konfiguriert, daß jede Neben-Endeinrichtung B, C, D, E mindestens in jedem zwanzigsten Rahmen (maximales Poll-Intervall) gepollt wird. Die Rahmenzahl in Fig. 7 ergibt sich aus der Summe der Spaltennummer und des Zeilenvortrags. Im dargestellten Beispiel wurde über das LM-Protokoll eingestellt, daß nur kurze ACL-Datenpakete (DM1 und DH1) benutzt werden dürfen. Ferner sind SCO-Datenverbindungen, Niederenergiemodi und ein Verbindungsaufbau zu weiteren Neben-Endeinrichtungen deaktiviert.

Beim üblichen Verfahren werden fortlaufend sämtliche Neben-Endeinrichtungen B, C, D, E in jedem zwanzigsten Rahmen angesprochen. In den ersten Rahmen 0, 1, 2, 3 antworten die Neben-Endeinrichtungen B, C, D, E nicht mit einem Nutzdaten tragenden Datenpaket. In dem Rahmen 21 antwortet die Neben-Endeinrichtung C mit einem Nutzdaten tragenden Datenpaket, da z.B. ein Druckauftrag abgesetzt werden soll. Die Rückübertragung eines Nutzdaten tragenden Datenpakets ist in Fig. 7 mit einem "!" kenntlich gemacht. Fortlaufend wird diese Neben-Endeinrichtung auf jedes Pollen (Ansprechen) seitens der Haupt-Endeinrichtung A mit einem Nutzdaten tragenden Datenpaket antworten, bis der Druckauftrag übermittelt ist. Die Mindestdaten-Transferrate ist dabei erfüllt. Nimmt man an, daß die Neben-Endeinrichtung C eine Datei der Größe 1 Mbyte übertragen möchte, dann dauert die Übertragung unter der Annahme, daß ausschließlich DH1-Pakete mit 27 byte Nutzlast verwendet werden und keine Retransmissionen auftreten,

1 Mbyte/27byte*20/800 Sekunden = 925 Sekunden.

Eine Anwendung des erfindungsgemäßen Verfahrens wird anhand des in Fig. 8 dargestellten Ansprech-Zeitschemas erläutert. Das Poll-Intervall beträgt ebenfalls 20 Rahmen. Nach Erhalt des im 21-sten Rahmen von der Neben-Endeinrichtung C ausgesendeten Antwort-Datenpakets wird die Neben-Endeinrichtung C gekennzeichnet. Die Kennzeichnung der Neben-Endeinrichtung C bewirkt, daß letztere seitens der Haupt-Endeinrichtung A in Rahmen, in denen ansonsten keine Datenübertragung erfolgt (siehe Fig. 7), die Neben-Endeinrichtung C anspricht (pollt). Folglich werden in dem dargestellten Beispiel sämtliche bisher nicht genutzten Rahmen zur Übertragung von Nutzdaten von der Neben-Endeinrichtung C zu der Haupt-Endeinrichtung A - wiederum verdeutlicht durch ein "!" - genutzt.

Damit nimmt die Übertragungsrate in diesem Beispiel um den Faktor 17 zu. Die Übertragung einer Datei der Größe 1 Mbyte beträgt somit 1 Mbyte/27byte* (20/17)/800 Sekunden = 54 Sekunden.

Es wird darauf hingewiesen, daß die in Fig. 8 erläuterte maximale Erhöhung der Datenübertragungsrate nur dann realisierbar ist, wenn in dem betrachteten Übertragungszeitraum keine SCO-Verbindung zu weiteren gegebenenfalls vorhandenen Neben-Endeinrichtungen herzustellen sind. SCO-Verbindungen genießen Priorität gegenüber ACL-Verbindungen. Soll beispielsweise eine SCO-Verbindung auf der Grundlage der Übertragung von HV3-Datenpaketen zu einer weiteren Neben-Endeinrichtung zugeschaltet werden, muß dieser jeder dritte Rahmen zugeteilt werden (das heißt eine HV3-SCO-Verbindung benötigt ein Drittel der gesamten verfügbaren Übertragungskapazität). Auch in diesem Fall würden die übrigen Rahmen jedoch noch der Datenverbindung zwischen der Neben-Endeinrichtung C und der Haupt-Endeinrichtung A zur Verfügung stehen, wobei die Nutzung der verbleibenden freien Übertragungsresourcen in der bereits beschriebenen Art und Weise durch "Auffüllen" der noch freien Rahmen des Ansprech-Zeitschemas mit an die Neben-Endeinrichtung C adressierten Datenabruf-Datenpaketen (POLL-Datenpaketen) bewerkstelligt wird.

**Patentansprüche**

1. Verfahren zur Erhöhung des Datendurchsatzes in einem Kommunikationssystem, insbesondere dem Bluetooth-Kommunikationssystem, das für einen bidirektionalen Informationsaustausch zwischen einer einzigen Haupt-Endeinrichtung (M) und mehreren Neben-Endeinrichtungen (S; S1, S2) auf der Basis von Datenpaketen ausgelegt ist, wobei

   - ein Kommunikationskanal des Systems eine vorgegebene Zeitschlitzstruktur (SL1, SL2, ..) aufweist, wobei in jedem Zeitschlitz entweder Information von der Haupt-Endeinrichtung (M) zu einer oder mehreren der Neben-Endeinrichtungen (S; S1, S2) oder Information von einer Neben-Endeinrichtung (S; S1, S2) zu der Haupt-Endeinrichtung (M) übertragbar ist, und wobei zumindest bei einer ersten Verbindungsart

     -- die Haupt-Endeinrichtung (M) jede Neben-Endeinrichtung (S; S1, S2), zu der eine bereits bestehende Verbindung aufgebaut ist, durch wiederholtes Zusenden eines an die entsprechende Neben-Endeinrichtung (S; S1, S2) adressierten Datenpakets nach einem geeigneten Ansprech-Zeitschema anspricht, und
     -- es der Neben-Endeinrichtung (S; S1, S2) nur dann möglich ist, der Haupt-Endeinrichtung eine begrenzte Anzahl von Nutzinformation tragenden Datenpaketen zurück zu senden, wenn sie zuvor von der Haupt-Endeinrichtung (M) durch Erhalt eines Datenpaketes angesprochen wurde,

**gekennzeichnet durch**
die während der bestehenden Verbindung durchgeführten Schritte:

- Überwachen des Kommunikationssystems auf das Eintreten einer vorgegebenen, einer Neben-Endeinrichtung (S; S1, S2) zugeordneten Betriebsbedingung, wobei die vorgegebene Betriebsbedingung bezüglich einer Neben-Endeinrichtung (S; S1, S2) eintritt, sofern diese in Antwort auf das zuletzt erfolgte Ansprechen seitens der Haupt-Endeinrichtung (M) ein Nutzinformation tragendes Datenpaket ausgesendet hat und dieses von der Haupt-Endeinrichtung (M) detektiert wird; und
- Aktualisieren des Ansprech-Zeitschemas **durch** Einfügen zusätzlicher Ansprech-Zeitpunkte für die betrachtete Neben-Endeinrichtung (S; S1, S2), sofern für diese Neben-Endeinrichtung (S; S1, S2) das Vorliegen der vorgegebenen Betriebsbedingung nachgewiesen wird.

2. Verfahren zur Erhöhung des Datendurchsatzes in einem Kommunikationssystem, insbesondere dem Bluetooth-Kommunikationssystem, das für einen bidirektionalen Informationsaustausch zwischen einer einzigen Haupt-Endeinrichtung (M) und mehreren Neben-Endeinrichtungen (S; S1, S2) auf der Basis von Datenpaketen ausgelegt ist, wobei .

- ein Kommunikationskanal des Systems eine vorgegebene Zeitschlitzstruktur (SL1, SL2, ..) aufweist, wobei in jedem Zeitschlitz entweder Information von der Haupt-Endeinrichtung (M) zu einer oder mehreren der Neben-Endeinrichtungen (S; S1, S2) oder Information von einer Neben-Endeinrichtung (S; S1, S2) zu der Haupt-Endeinrichtung (M) übertragbar ist, und wobei zumindest bei einer ersten Verbindungsart

-- die Haupt-Endeinrichtung (M) jede Neben-Endeinrichtung (S; S1, S2), zu der eine bereits bestehende Verbindung aufgebaut ist, durch wiederholtes Zusenden eines an die entsprechende Neben-Endeinrichtung (S; S1, S2) adressierten Datenpakets nach einem geeigneten Ansprech-Zeitschema anspricht,
-- es der Neben-Endeinrichtung (S; S1, S2) nur dann möglich ist, der Haupt-Endeinrichtung eine begrenzte Anzahl von Nutzinformation tragenden Datenpaketen zurück zu senden, wenn sie zuvor von der Haupt-Endeinrichtung (M) durch Erhalt eines Datenpaketes angesprochen wurde, und

-- bei welchem die Neben-Endeinrichtung auf den fehlerfreien Erhalt eines Nutzdaten tragenden Datenpaketes von der Haupt-Endeinrichtung (M) durch Rücksenden eines den fehlerfreien Empfang des erhaltenen Datenpaketes bestätigen-den Datenpaketes an die Haupt-Endeinrichtung (M) antwortet,

**gekennzeichnet durch**
die während der bestehenden Verbindung durchgeführten Schritte:

- Überwachen des Kommunikationssystems auf das Eintreten einer vorgegebenen, einer Neben-Endeinrichtung (S; S1, S2) zugeordneten Betriebsbedingung, wobei die vorgegebene Betriebsbedingung bezüglich einer Neben-Endeinrichtung (S; S1, S2) eintritt, sofern in Antwort auf ein an die betrachtete Neben-Endeinrichtung (S; S1, S2) adressiertes und ausgesendetes Datenpaket keine Bestätigung des fehlerfreien Empfangs der Nutzdaten in dem von dieser Neben-Endeinrichtung (S; S1, S2) rückgesendeten Datenpaket an der Haupt-Endeinrichtung (M) erhalten wird, und
- Aktualisieren des Ansprech-Zeitschemas **durch** Einfügen zusätzlicher Ansprech-Zeitpunkte für die betrachtete Neben-Endeinrichtung (S; S1, S2), sofern für diese Neben-Endeinrichtung (S; S1, S2) das Vorliegen der vorgegebenen Betriebsbedingung nachgewiesen wird.

3. Verfahren nach einem der vorhergehenden Ansprüche,
**gekennzeichnet durch**
den Schritt:

- Zurücksetzen des Ansprech-Zeitschemas auf das vor Eintritt der einer Neben-Endeinrichtung (S; S1, S2) zugeordneten Betriebsbedingungen verwendete Ansprech-Zeitschema, sofern keine der in den Ansprüchen 1 oder 2 angegebenen Betriebsbedingungen mehr erfüllt sind.

4. Verfahren nach einem der vorhergehenden Ansprüche,
**dadurch gekennzeichnet,**

- **daß** eine von der Haupt-Endeinrichtung (M) angesprochene Neben-Endeinrichtung (S; S1, S2) dieser daraufhin nur ein einziges Nutzinformation tragendes Datenpaket zurücksenden kann.

**5.** Verfahren nach einem der vorhergehenden Ansprüche,
**dadurch gekennzeichnet,**

- **daß** das Verfahren nur für die Übertragung von Datenpaketen eingesetzt wird, die einen einzigen Zeitschlitz belegen.

**6.** Verfahren nach einem der vorhergehenden Ansprüche,
**dadurch gekennzeichnet,**

- **daß** die Zeitschlitze, in denen Information von der Haupt-Endeinrichtung (M) zu einer oder mehreren der Neben-Endeinrichtungen (S; S1, S2) übertragbar ist und die Zeitschlitze, in denen Information von einer Neben-Endeinrichtungen (S; S1, S2) zu der Haupt-Endeinrichtung (M) übertragbar ist, alternierend angeordnet sind.

**7.** Verfahren nach einem der vorhergehenden Ansprüche,
**dadurch gekennzeichnet,**

- **daß** das vor einer Aktualisierung verwendete Ansprech-Zeitschema für jede Neben-Endeinrichtung (S; S1, S2) eine konstante, insbesondere für sämtliche Neben-Endeinrichtungen (S; S1, S2) identische Wiederholungsperiode aufweist.

**8.** Verfahren nach einem der vorhergehenden Ansprüche,
**dadurch gekennzeichnet,**

- **daß** eine zweite Verbindungsart existiert, für welche bestimmte Zeitschlitze reserviert werden und in welcher es einer Neben-Endeinrichtung (S; S1, S2) auf den Erhalt eines Datenpaketes von der Haupt-Endeinrichtung (M) möglich ist, der Haupt-Endeinrichtung (M) solange Datenpakete zurück zu senden, bis eine andere Neben-Endeinrichtung (S; S1, S2) von der Haupt-Endeinrichtung (M) angesprochen wird,
- **daß** die erste und die zweite Verbindungsart in Konkurrenz zueinander auf dem Kommunikationskanal betrieben werden, und
- **daß** die Aktualisierung des Ansprech-Zeitschemas bei Bedingungseintritt bezüglich der anderen Neben-Endeinrichtung derart erfolgt, daß zusätzliche Ansprech-Zeitpunkte in nicht reservierte Zeitschlitze eingefügt werden.

**9.** Verfahren nach einem der Ansprüche 1 bis 7,
**dadurch gekennzeichnet,**

- **daß** eine zweite Verbindungsart existiert, für welche bestimmte Zeitschlitze reserviert werden und in welcher es einer Neben-Endeinrichtung (S; S1, S2) auf den Erhalt eines Datenpaketes von der Haupt-Endeinrichtung (M) möglich ist, der Haupt-Endeinrichtung (M) solange Datenpakete zurück zu senden, bis eine andere Neben-Endeinrichtung (S; S1, S2) von der Haupt-Endeinrichtung (M) angesprochen wird,
- **daß** die erste und die zweite Verbindungsart in Konkurrenz zueinander auf dem Kommunikationskanal betrieben werden, und
- **daß** die Aktualisierung des Ansprech-Zeitschemas bei Bedingungseintritt bezüglich der anderen Neben-Endeinrichtung (S; S1, S2) derart erfolgt, daß zusätzliche Ansprech-Zeitpunkte erst dann wieder eingefügt werden, wenn eine Übertragung von Datenpaketen von der Neben-Endeinrichtung (S; S1, S2) zur Haupt-Endeinrichtung in der zweiten Verbindungsart beendet ist.

**Claims**

**1.** Method for increasing the data throughput in a communication system, particularly the Bluetooth communication system, which is designed for bidirectional information interchange between a single main terminal (M) and a plurality of subsidiary terminals (S; S1, S2) on the basis of data packets, where

- a communication channel in the system has a prescribed timeslot structure (SL1, SL2, ..), with each timeslot being able to be used to transmit either information from the main terminal (M) to one or more of the subsidiary terminals (S; S1, S2) or information from a subsidiary terminal (S; S1, S2) to the main terminal (M), and with at least a first connection type involving

-- the main terminal (M) invoking each subsidiary terminal (S; S1, S2) to which an already existing connection has been set up by repeatedly sending a data packet addressed to the appropriate subsidiary terminal (S; S1, S2) on the basis of a suitable invocation time scheme, and
-- the subsidiary terminal (S; S1, S2) being able to return a limited number of data packets carrying useful information to the main terminal only if it has previously been invoked by the main terminal (M) through receipt of a data packet,

**characterized by**
the following steps performed while the connection exists:

- the communication system is monitored for the appearance of a prescribed operating condition associated with a subsidiary terminal (S; S1, S2), the prescribed operating condition for a subsidiary terminal (S; S1, S2) appearing provided that the latter has transmitted a data packet carrying useful information in response to the last invocation to come from the main terminal (M) and this data packet is detected by the main terminal (M); and
- the invocation time scheme is updated by inserting additional invocation times for the subsidiary terminal (S; S1, S2) under consideration provided that the prescribed operating condition is proved to exist for this subsidiary terminal (S; S1, S2).

2. Method for increasing the data throughput in a communication system, particularly the Bluetooth communication system, which is designed for bidirectional information interchange between a single main terminal (M) and a plurality of subsidiary terminals (S; S1, S2) on the basis of data packets, where

- a communication channel in the system has a prescribed timeslot structure (SL1, SL2, ..), with each timeslot being able to be used to transmit either information from the main terminal (M) to one or more of the subsidiary terminals (S; S1, S2) or information from a subsidiary terminal (S; S1, S2) to the main terminal (M), and with at least a first connection type involving

-- the main terminal (M) invoking each subsidiary terminal (S; S1, S2) to which an already existing connection has been set up by repeatedly sending a data packet addressed to the appropriate subsidiary terminal (S; S1, S2) on the basis of a suitable invocation time scheme, and
-- the subsidiary terminal (S; S1, S2) being able to return a limited number of data packets carrying useful information to the main terminal only if it has previously been invoked by the main terminal (M) through receipt of a data packet, and
-- where the subsidiary terminal responds to the correct receipt of a data packet carrying useful data from the main terminal (M) by returning a data packet confirming correct receipt of the received data packet to the main terminal (M),

**characterized by**

the following steps performed while the connection exists:

- the communication system is monitored for the appearance of a prescribed operating condition associated with a subsidiary terminal (S; S1, S2), the prescribed operating condition for a subsidiary terminal (S; S1, S2) appearing provided that in response to a data packet which is addressed and transmitted to the subsidiary terminal (S; S1, S2) under consideration the main terminal (M) does not receive confirmation of the correct receipt of the useful data in the data packet returned by this subsidiary terminal (S; S1, S2), and
- the invocation time scheme is updated by inserting additional invocation times for the subsidiary terminal (S; S1, S2) under consideration provided that the prescribed operating condition is proved to exist for this subsidiary terminal (S; S1, S2).

3. Method according to one of the preceding claims, **characterized by** the following step:

- the invocation time scheme is reset to the invocation time scheme used prior to the appearance of the operating conditions associated with a subsidiary terminal (S; S1, S2) provided that none of the operating conditions indicated in Claims 1 and 2 are met any longer.

4. Method according to one of the preceding claims, **characterized**

- **in that** a subsidiary terminal (S; S1, S2) invoked by the main terminal (M) can then return only a single data packet carrying useful information to said main terminal (M).

5. Method according to one of the preceding claims, **characterized**

- **in that** the method is used only for transmitting data packets which occupy a single timeslot.

6. Method according to one of the preceding claims, **characterized**

- **in that** the timeslots which can be used to transmit information from the main terminal (M) to one or more of the subsidiary terminals (S; S1, S2) and the timeslots which can be used to transmit information from a subsidiary terminal (S; S1, S2) to the main terminal (M) are arranged alternately.

**7.** Method according to one of the preceding claims, **characterized**

- **in that** the invocation time scheme used prior to an update has a constant repetition period for each subsidiary terminal (S; S1, S2), particularly a repetition period which is identical for all subsidiary terminals (S; S1, S2).

**8.** Method according to one of the preceding claims, **characterized**

- **in that** a second connection type exists for which particular timeslots are reserved and in which a subsidiary terminal (S; S1, S2) is able, upon receipt of a data packet from the main terminal (M), to return data packets to the main terminal (M) until another subsidiary terminal (S; S1, S2) is invoked by the main terminal (M),
- **in that** the first and second connection types are operated in competition with one another on the communication channel, and
- **in that** the invocation time scheme is updated upon the appearance of a condition for the other subsidiary terminal such that additional invocation times are inserted into unreserved timeslots.

**9.** Method according to one of Claims 1 to 7, **characterized**

- **in that** a second connection type exists for which particular timeslots are reserved and in which a subsidiary terminal (S; S1, S2) is able, upon receipt of a data packet from the main terminal (M), to return data packets to the main terminal (M) until another subsidiary terminal (S; S1, S2) is invoked by the main terminal (M),
- **in that** the first and second connection types are operated in competition with one another on the communication channel, and
- **in that** the invocation time scheme is updated upon the appearance of a condition for the other subsidiary terminal (S; S1, S2) such that additional invocation times are not inserted again until transmission of data packets from the subsidiary terminal (S; S1, S2) to the main terminal in the second connection type has been terminated.

**Revendications**

**1.** Procédé d'augmentation du débit de données dans un système de communication, notamment dans le système de communication Bluetooth, qui est conçu pour un échange d'informations bidirectionnel entre un terminal (M) maître unique et plusieurs terminaux (S ; S1, S2) esclaves sur la base de paquets de données, dans lequel

- un canal de communication du système a une structure (SL1, SL2, ...) prescrite de créneau temporel, de l'information pouvant dans chaque créneau temporel être transmise du terminal (M) maître à un ou à plusieurs des terminaux (S ; S1, S2) esclaves ou d'un terminal (S ; S1, S2) esclave au terminal (M) maître, et dans lequel au moins dans un premier type de liaison

  -- le terminal (M) maître active, suivant un schéma temporel d'activation approprié, chaque terminal (S ; S1, S2) esclave avec lequel une liaison déjà existante est formée par envoi répété d'un paquet de données adressées au terminal (S ; S1, S2) esclave, et
  -- il n'est possible pour le terminal (S ; S1, S2) esclave de retourner au terminal maître des paquets de données portant un nombre limité d'informations utiles que si, au préalable, il a été activé par le terminal (M) maître par réception d'un paquet de données,

  **caractérisé par** les stades effectués pendant la liaison existante :

- contrôle du système de communication pour ce qui concerne l'apparition d'une condition de fonctionnement prescrite associée à un terminal (S ; S1, S2) esclave, la condition prescrite de fonctionnement concernant un terminal (S ; S1, S2) esclave apparaissant dès que celui-ci a émis en réponse à l'activation effectuée en dernier de la part du terminal (M) maître un paquet de données portant une information utile et que celui-ci est détecté par le terminal (M) maître ; et
- actualisation du schéma temporel d'activation par insertion d'instants d'activation supplémentaires du terminal (S ; S1, S2) esclave, considéré dès qu'il a été détecté pour ce terminal (S ; S1, S2) esclave la présence de la condition prescrite de fonctionnement.

**2.** Procédé d'augmentation du débit de données dans un système de communication, notamment dans le système de communication Bluetooth, qui est conçu pour un échange d'informations bidirectionnel entre un terminal (M) maître unique et plusieurs terminaux (S ; S1, S2) esclaves sur la base de paquets de données, dans lequel

- un canal de communication du système a une structure (SL1, SL2, ...) prescrite de créneau temporel, de l'information pouvant dans chaque créneau temporel être transmise du terminal (M) maître à un ou à plusieurs des terminaux (S ; S1, S2) esclaves ou d'un terminal (S ; S1, S2) esclave au terminal (M) maître, et dans lequel au moins dans un premier type de liaison

- - le terminal (M) maître active, suivant un schéma temporel d'activation approprié, chaque terminal (S ; S1, S2) esclave avec lequel une liaison déjà existante est formée par envoi répété d'un paquet de données adressées au terminal (S ; S1, S2) esclave, et

- - il n'est possible pour le terminal (S ; S1, S2) esclave de retourner au terminal maître des paquets de données portant un nombre limité d'informations utiles que si, au préalable, il a été activé par le terminal (M) maître par réception d'un paquet de données, et

- - dans lequel le terminal esclave répond à la réception sans erreur d'un paquet de données portant des données utiles par le terminal (M) maître par renvoi au terminal (M) maître d'un paquet de données confirmant la réception sans erreur du paquet de données reçu,

    **caractérisé par** les stades effectués pendant la liaison existante :

- contrôle du système de communication pour ce qui concerne l'apparition d'une condition de fonctionnement prescrite associée à un terminal (S ; S1, S2) esclave, la condition prescrite de fonctionnement concernant un terminal (S ; S1, S2) esclave se produisant dès que, en réponse à un paquet de données adressées au terminal (S ; S1, S2) esclave concerné et émis, il n'est pas reçu de confirmation au terminal (M) maître de la réception sans erreur des données utiles dans le paquet de données renvoyé par ce terminal (S ; S1, S2) esclave, et

- actualisation du schéma temporel d'activation par insertion d'instants supplémentaires d'activation du terminal (S ; S1, S2) esclave concerné tant qu'il n'a pas été détecté pour ce terminal (S ; S1, S2) esclave la présence de la condition prescrite de fonctionnement.

**3.** Procédé suivant l'une des revendications précédentes, **caractérisé par** les stades :

- remise du schéma temporel d'activation au schéma temporel d'activation utilisé avant l'apparition des conditions de fonctionnement associées à un terminal (S ; S1, S2) esclave, dans la mesure où aucune des conditions de fonctionnement indiquées aux revendications 1 ou 2 ne sont plus satisfaites.

**4.** Procédé suivant l'une des revendications précédentes, **caractérisé :**

- **en ce qu'**un terminal (S ; S1, S2) esclave activé par le terminal (M) maître peut retourner ensuite à celui-ci seulement un seul paquet de données portant de l'information utile.

**5.** Procédé suivant l'une des revendications précédentes, **caractérisé :**

- **en ce qu'**on utilise le procédé seulement pour la transmission de paquets de données qui occupent un créneau temporel unique.

**6.** Procédé suivant l'une des revendications précédentes, **caractérisé :**

- **en ce que** les créneaux temporels dans lesquels de l'information peut être transmise du terminal (M) maître à un ou à plusieurs des terminaux (S ; S1, S2) esclaves et les créneaux temporels dans lesquels de l'information peut être transmise d'un terminal (S ; S1, S2) esclave au terminal (M) maître sont disposés en alternance.

**7.** Procédé suivant l'une des revendications précédentes, **caractérisé :**

- **en ce que** le schéma temporel d'activation utilisé avant une actualisation pour chaque terminal (S ; S1, S2) esclave a une période de répétition constante identique notamment pour tous les terminaux (S ; S1, S2) esclaves.

**8.** Procédé suivant l'une des revendications précédentes, **caractérisé :**

- **en ce qu'**il existe un deuxième type de liaison pour lequel certains créneaux temporels sont réservés et dans lequel il est possible à un terminal (S ; S1, S2) esclave, sur réception d'un paquet de données provenant du terminal (M) maître, de renvoyer au terminal (M) maître des paquets de données jusqu'à ce qu'un autre terminal (S ; S1, S2) esclave soit activé par le terminal (M) maître,

- **en ce que** le premier et le deuxième type de liaison fonctionnent en concurrence sur le canal de communication, et

- **en ce que** l'actualisation du schéma temporel d'activation s'effectue lors de l'apparition d'une condition concernant l'autre terminal esclave, de façon à ce que des instants supplémentaires d'activation soient insérés dans des créneaux temporels non réservés.

9. Procédé suivant l'une des revendications 1 à 7, **caractérisé**

   - **en ce qu'**il existe un deuxième type de liaison pour lequel certains créneaux temporels sont réservés et dans lequel il est possible à un terminal (S ; S1, S2) esclave, sur réception d'un paquet de données provenant du terminal (M) maître, de renvoyer au terminal (M) maître des paquets de données jusqu'à ce qu'un autre terminal (S ; S1, S2) esclave soit activé par le terminal (M) maître,
   - **en ce que** le premier et le deuxième type de liaison fonctionnent en concurrence sur le canal de communication, et
   - **en ce que** l'actualisation du schéma temporel d'activation lors de l'apparition d'une condition concernant l'autre terminal (S ; S1, S2) esclave s'effectue de sorte que des instants supplémentaires d'activation ne sont réinsérés que si une transmission de paquets de données du terminal (S ; S1, S2) esclave au terminal maître dans le deuxième type de liaison est achevée.

Fig.1

Fig.2

Fig.3

| 72 | 54 | 0 – 2745 |
|----|----|----------|
| AC | H | ND |

## Fig.4

| 3 | 4 | 1 | 1 | 1 | 8 |
|---|---|---|---|---|---|
| AM_ADDR | TYPE | FLOW | ARQN | SEQN | HEC |

## Fig.5

## Fig.6

Spaltennummer

| Zeilenvortrag | 0 | 1 | 2 | 3 | 4 | 5 | 6 | 7 | 8 | 9 |
|---|---|---|---|---|---|---|---|---|---|---|
| | B | C | D | E | | | | | | |
| +10 | | | | | | | | | | |
| +20 | B | C! | D | E | | | | | | |
| +30 | | | | | | | | | | |
| +40 | B | C! | D | E | | | | | | |
| +50 | | | | | | | | | | |
| +60 | B | C! | D | E | | | | | | |
| +70 | | | | | | | | | | |
| +80 | B | C! | D | E | | | | | | |

## Fig.7

(Stand der Technik)

Spaltennummer

| Zeilenvortrag | 0 | 1 | 2 | 3 | 4 | 5 | 6 | 7 | 8 | 9 |
|---|---|---|---|---|---|---|---|---|---|---|
| | B | C | D | E | | | | | | |
| +10 | | | | | | | | | | |
| +20 | B | C! | D | E | C! | C! | C! | C! | C! | C! |
| +30 | C! | C! | C! | C! | C! | C! | C! | C! | C! | C! |
| +40 | B | C! | D | E | C! | C! | C! | C! | C! | C! |
| +50 | C! | C! | C! | C! | C! | C! | C! | C! | C! | C! |
| +60 | B | C! | D | E | C! | C! | C! | C! | C! | C! |
| +70 | C! | C! | C! | C! | C! | C! | C! | C! | C! | C! |
| +80 | B | C! | D | E | C! | C! | C! | C! | C! | C! |

## Fig.8